**Europäisches Patentamt**

**European Patent Office**

**Office européen des brevets**

(19)

(11) Veröffentlichungsnummer : **0 366 879 B1**

(12) **EUROPÄISCHE PATENTSCHRIFT**

(45) Veröffentlichungstag der Patentschrift :
**23.09.92 Patentblatt 92/39**

(51) Int. Cl.$^5$ : **C09J 161/24,** B27N 3/00,
C08G 12/12, C08L 97/02

(21) Anmeldenummer : **89114038.6**

(22) Anmeldetag : **29.07.89**

(54) **Verfahren zur Herstellung eines reaktiven Harnstoff-Formaldehyd-Harz-Leimes.**

(30) Priorität : **21.10.88 DD 320967**

(43) Veröffentlichungstag der Anmeldung :
**09.05.90 Patentblatt 90/19**

(45) Bekanntmachung des Hinweises auf die
Patenterteilung :
**23.09.92 Patentblatt 92/39**

(84) Benannte Vertragsstaaten :
**AT BE CH DE ES FR GB GR IT LI LU NL SE**

(56) Entgegenhaltungen :
**EP-A- 0 038 180**
**EP-A- 0 211 531**
**DD-A- 160 384**
**DE-A- 3 132 280**
**DE-A- 3 444 203**

(73) Patentinhaber : **LEUNA-WERKE AG**
**Thälmann-Platz**
**O-4220 Leuna 3 (DE)**

(72) Erfinder : **Winter, Harald, Dr. Dipl.-Chem.**
**Windmühlenstrasse 10**
**O-4220 Leuna (DE)**
Erfinder : **Petz, Annelies**
**Lutherstrasse 18d**
**O-4203 Bad Dürrenberg (DE)**
Erfinder : **Neumann, Rainer, Dr. Dipl.-Chem.**
**Nelkenweg 1**
**O-4220 Leuna (DE)**

Erfinder : **Kunath, Gerhard, Dipl.-Chem.**
**Windmühlenstrasse 8**
**O-4220 Leuna (DE)**
Erfinder : **Ulrich, Katarina**
**R.-Fritz-Strasse 3**
**O-4203 Bad Dürrenberg (DE)**
Erfinder : **Steinke, Ulrich, Dr. Dipl.-Chem.**
**K.-Schurz-Strasse 2**
**O-4020 Halle (DE)**
Erfinder : **Hammer, Lothar**
**Bl. 034/8**
**O-4090 Halle-Neustadt (DE)**
Erfinder : **Mittag, Lisa, Dr. Dipl.-Chem.**
**Kleiststrasse 71**
**O-7000 Leipzig (DE)**
Erfinder : **Esser, Gerhard, Dr. Dipl.-Chem.**
**Lilienweg 2**
**O-4220 Leuna (DE)**
Erfinder : **Schille, Wolfrun, Dipl.-Chem.**
**Bl. 332/1/41**
**O-4090 Halle-Neustadt (DE)**
Erfinder : **Barthel, Dieter, Dr. Dipl.-Chem.**
**Wöhlerstrasse 8**
**O-4220 Leuna (DE)**
Erfinder : **Oehler, Kurt, Dr. Dipl.-Chem.**
**Bl. 201/3/12**
**O-4090 Halle-Neustadt (DE)**
Erfinder : **Barse, Joachim**
**Bl. 467/3**
**O-4090 Halle-Neustadt (DE)**
Erfinder : **Drechsel, Henry, Dr. Dipl.-Chem.**
**Meneckestrasse 16**
**O-7022 Leipzig (DE)**

## Beschreibung

Die Erfindung betrifft ein Verfahren zur Herstellung von Harnstoff-Formaldehyd-Harz-Leimen, die in der holzverarbeitenden Industrie, insbesondere für die Produktion von Spanplatten, eingesetzt werden.

Die für die Spanplattenherstellung eingesetzten Harnstoff- Formaldehyd-Harz-Leime sind die Ursache dafür, daß aus den mit diesen Harz-Leimen hergestellten Spanplatten nachträglich mehr oder weniger Formaldehyd abgespalten wird.

Es werden zukünftig nur Harnstoff-Formaldehyd-Harz-Leime eingesetzt werden können, die die Herstellung von Spanplatten mit der Emissionsklasse E 1 gestatten.

Die Formaldehydabspaltung wird u.a. vom Molverhältnis Harnstoff zu Formaldehyd beeinflußt. Sie ist umso geringer, je höher der Anteil Harnstoff bzw. je niedriger der Anteil Formaldehyd am Harnstoff-Formaldehyd-Harz ist.

Nachteilig wirkt sich jedoch die Verringerung des Formaldehydanteiles im Harz auf die Reaktivität des Leimes und damit auf die Geschwindigkeit, bei erhöhter Temperatur in den unlöslichen Zustand überzugehen, aus. Daraus resultieren verlängerte Preßzeiten bei der Spanplattenherstellung und damit Kapazitätseinschränkungen bei der Spanplattenproduktion.

Es ist bekannt, die Formaldehydabspaltung dadurch zu vermindern, daß man Harnstoff und Formaldehyd im sauren Medium unter $CO_2$-Druck so lange kondensiert, bis mindestens 40 % des eingesetzten Formaldehyds in Form von Methylenbrücken vorliegen (DD 160 384). Nachteilig bei diesem Verfahren ist, daß die Reaktivität der erhaltenen Harz-Leime negativ beeinflußt wird.

Es ist weiterhin bekannt, die Formaldehydabspaltung von Spanplatten dadurch zu vermindern, daß durch die fertiggepreßten Spanplatten bei 320 bis 373 K Ammoniak gesaugt wird (DE-OS 2 804 514). Nachteilig bei dieser Verfahrensweise ist, daß bei der Spanplattenherstellung eine technisch aufwendige zusätzliche Verfahrensstufe erforderlich ist und ein zusätzlicher Energieaufwand benötigt wird.

Schließlich kann man laut DD-PS 107 471 von einer Harnstoff-Formaldehyd-Lösung im Molverhältnis 1 zu 3 ausgehen und bei extrem niedrigem pH-Wert von 3 und Temperaturen von 363 bis 373 K so lange kondensieren, bis wenigstens 1 % des Harnstoffes als Uronverbindung vorliegt. Durch Zugabe von Harnstoff wird ein Endmolverhältnis von 1 zu 1 bis 1 zu 2,75 eingestellt. Nachteilig bei diesem Verfahren ist die schwer zu beherrschende Reaktionsführung bei dem für die Herstellung von Harnstoff-Formaldehyd-Harzen ungewöhnlich niedrigen pH-Wert.

## Ziel der Erfindung

Ziel der Erfindung ist ein kontinuierliches Verfahren zur Herstellung von Harnstoff-Formaldehyd-Harz-Leimen mit hoher Reaktivität, bei deren Verarbeitung Spanplatten der Emissionsklasse E 1 erhalten werden.

## Darlegung des Wesens der Erfindung

Es bestand die Aufgabe, ein Verfahren zur Herstellung von Harnstoff-Formaldehyd-Harz-Leimen, die die Herstellung von Spanplatten der Emissionsklasse E 1 gestatten und eine wesentlich verbesserte Reaktivität gegenüber den herkömmlichen E 1-Leimen besitzen, zu entwickeln.

Diese Aufgabe wird durch kontinuierliche Kondensation von Harnstoff und etwa 37%iger wäßriger Formaldehyd-Lösung im Molverhältnis Harnstoff zu Formaldehyd von 1 zu 1,8 bis 1 zu 2,1 bei 383 bis 393 K und einem pH-Wert von 6,0 bis 6,5, Einstellung eines Endmolverhältnisses von Harnstoff zu Formaldehyd unter alkalischen Bedingungen von 1 zu 1,0 bis 1 zu 1,1 und Aufkonzentrierung des Leimes auf 66 Gew.-% Feststoff erfindungsgemäß dadurch gelöst, daß man die Harnstoff-Formaldehydlösung im Molverhältnis 1 zu 1,8 bis 1 zu 2,1, bevor sie der sauren Kondensation bei 383 bis 393 K unterzogen wird, zunächst bei einem pH-Wert von 7,2 bis 8,0, der durch Laugezugabe eingestellt wird, und einer Temperatur von 288 bis 313 K so lange reagieren läßt, bis 10 bis 15 % des gesamten Formaldehyds als Methylolgruppen vorliegen, und danach sofort durch Zugabe eines sauren Katalysators einen pH-Wert von 5,0 bis 5,5 einstellt und unter diesen Bedingungen das Reaktionsgemisch 15 bis 25 Minuten bei 300 bis 323 K reagieren läßt.

Das Wesen der Erfindung besteht darin, daß vor der sauren Kondensation zwischen Harnstoff und Formaldehyd im Molverhältnis 1 zu 1,8 bis 1 zu 2,1 bei 383 bis 393 K zunächst alkalisch bei 288 bis 313 K 10 bis 15 % des gesamten Formaldehyds in Form von Methylolgruppen gebunden werden und in einem weiteren Schritt bei 303 bis 323 K im sauren Bereich die Reaktion zwischen Harnstoff und Formaldehyd fortgeführt wird.

Auf diese Weise wird trotz eines hohen Anteils an Harnstoff ein Harnstoff-Formaldehyd-Leim-Harz erhalten, das eine wesentlich verbesserte Reaktivität aufweist.

Dem Fachmann ist bekannt, daß vor der eigentlichen Vernetzungsreaktion zwischen Harnstoff und Formaldehyd im sauren Bereich im allgemeinen die sogenannte Methylolisierung unter alkalischen Bedingungen vorangestellt wird, wobei Formaldehyd in Form von Methylolgruppen an Harnstoff gebunden wird.

In der DE-OS 2 726 617 wird z.B. empfohlen, die Methylolgruppenbildung an dieser Stelle bis zu 80 % zu führen. Dadurch wird die Bildung von unlöslichen Harnstoff-Formaldehyd-Kondensaten, die die Verwendung solcher Kondensate stark beeinträchtigen, vermieden.

Überraschenderweise ist die saure Kondensation ohne die Abscheidung von unlöslichen Harnstoff-Formaldehyd-Kondensationsprodukten auch dann möglich, wenn nur 10 bis 15 % des gesamten Formaldehyds unter alkalischen Bedingungen mit Harnstoff reagiert haben.

Ausführungsbeispiele

Beispiel 1

Zu 1540,5 Gewichtsteilen wäßriger 37%iger Formaldehydlösung werden 0,68 Gewichtsteile 10%iger Natronlauge gegeben und danach 600 Gewichtsteile Harnstoff gelöst. Es stellt sich ein pH-Wert von 7,2 ein. Die so erhaltene Lösung wird bei 295 K so lange gerührt, bis 11 % des Formaldehyds, bezogen auf die gesamte Formaldehydmenge, in Form von Methylolgruppen vorliegen. Danach wird die Lösung in eine kontinuierlich arbeitende Rührmaschine eingespritzt, in der sie 20 Min. bei pH 5,2 und 303 K reagiert.

Unmittelbar danach wird diese Lösung kontinuierlich in einen mit Standregelung und Umwälzvorrichtung versehenen Kondensationsreaktor überführt und bei einem pH-Wert von 6,0 und 388 K und einem Druck von $2,4 . 10^5$ Pa kondensiert. Das Kondensationsprodukt, das eine Viskosität von 93 mPas bei 293 K besitzt, wird kontinuierlich in ein weiteres, ebenfalls mit Standregelung und Umwälzvorrichtung ausgestattetes Reaktionsgefäß überführt, dort durch Zugabe von 10%iger Natronlauge ein pH-Wert von 8 bis 9 eingestellt und soviel 70%ige Harnstofflösung zudosiert, daß ein Molverhältnis von Harnstoff zu Formaldehyd von 1 zu 1,05 entsteht.

In diesem Reaktionsgefäß wird unter vermindertem Druck bei einer Temperatur von 333 K weiterkondensiert und gleichzeitig durch Abdestillieren von Wasser der Feststoffgehalt auf 66,6 % erhöht, wobei sich, nachdem das Produkt einen Kühlapparat durchlaufen hat, eine Viskosität von 520 mPas bei 293 K einstellt.

Beispiel 2

Zu 1621,6 Gewichtsteilen wäßriger 37%iger Formaldehydlösung werden 0,72 Gewichtsteile 10%iger Natronlauge gegeben und darin 600 Gewichtsteile Harnstoff gelöst. Es stellt sich ein pH-Wert von 7,8 ein. Die so erhaltene Lösung wird bei 310 K so lange gerührt, bis 13 % des Formaldehyds, bezogen auf die gesamte Formaldehydmenge, in Form von Methylolgruppen vorliegen. Anschließend wird die Lösung in eine kontinuierlich arbeitende Rührmaschine eingespritzt, in der sie 25 Min. bei pH 5,1 und 320 K zur Reaktion gebracht wird.

Unmittelbar danach wird diese Lösung kontinuierlich in einen mit Standregelung und Umwälzvorrichtung versehenen Kondensationsreaktor überführt und bei einem pH-Wert von 6,3 und 389 K und einem Druck von $2,4 . 10^5$ Pa kondensiert. Das Kondensationsprodukt, das eine Viskosität von 91 mPas bei 293 K besitzt, wird kontinuierlich in ein weiteres, ebenfalls mit Standregelung und Umwälzvorrichtung ausgestattetes Reaktionsgefäß übergeführt, dort durch Zugabe von 10%iger Natronlauge ein pH-Wert von 8 bis 9 eingestellt und soviel 60%ige Harnstofflösung zudosiert, daß ein Molverhältnis von Harnstoff zu Formaldehyd von 1 zu 1,08 entsteht. In dem gleichen Reaktionsgefäß wird unter vermindertem Druck bei einer Temperatur von 330 K weiterkondensiert und gleichzeitig durch Abdestillieren von Wasser der Feststoffgehalt auf 66,4 % erhöht. Nach dem Kühlen hat das Produkt eine Viskosität von 530 mPas bei 293 K.

Beispiel 3

In 1500 Gewichtsteilen wäßriger 37%iger Formaldehydlösung werden nach der Zugabe von 0,66 Gewichtsteilen 10%iger Natronlauge 600 Gewichtsteile Harnstoff gelöst, wobei sich ein pH-Wert von 7,6 einstellt.

Die erhaltene Lösung wird bei 290 K so lange gerührt, bis 10 % des Formaldehyds, bezogen auf die gesamte Formaldehydmenge, in Form von Methylolgruppen vorliegen. Anschließend wird die Lösung in eine kontinuierlich arbeitende Rührmaschine gefördert, in der sie 15 Min. bei pH 5,4 und 315 K zur Reaktion gebracht wird.

Unmittelbar danach wird diese Lösung kontinuierlich in einem mit Standregelung und Umwälzvorrichtung versehenen Kondensationsreaktor übergeführt und bei einem pH-Wert von 6,4 und 388 K und einem Druck von $2,4 \times 10^5$ Pa kondensiert. Das Kondensationsprodukt besitzt eine Viskosität von 97 mPas bei 293 K und wird kontinuierlich in ein weiteres, ebenfalls mit Standregelung und Umwälzvorrichtung ausgestattetes Reaktionsgefäß übergeführt, durch Zugabe von 10%iger Natronlauge ein pH-Wert von 8 bis 9 eingestellt und soviel 70%ige Harnstofflösung zudosiert, daß ein Molverhältnis von Harnstoff zu Formaldehyd von 1 zu 1,1 entsteht. Im gleichen Reaktionsgefäß wird unter vermindertem Druck bei einer Temperatur von 335 K weiterkondensiert und gleichzeitig durch Abdestillieren von Wasser der Feststoffgehalt auf 66,7 % erhöht. Nach der Kühlung hat das Produkt eine Viskosität von 515 mPas bei 293 K.

In der folgenden Tabelle sind die Reaktivität (Gelierzeit), die Formaldehydabspaltung aus der Spanplatte in Gew.-% (bestimmt nach FESYP-Perforatormethode) und der Methylolgruppengehalt der Harnstoff- Formaldehyd-Lösung vor der Kondensation in saurem Medium erfindungsgemäß und nach Stand der Technik (DE-OS 3 444 203) hergestellter herkömmlicher Leime gegenübergestellt.

## Tabelle

| | Gelierzeit bei 373 K (sec) | Formaldehyd- abspaltung (Gew.-%) | Methylolgruppengehalt bez. auf Gesamtformal- dehyd vor saurer Konden- sation (%) |
|---|---|---|---|
| **Herkömmliche Leime** | | | |
| Molverhältnis entspr. Bsp. 1 | 178 | 6,5 | 95 |
| Molverhältnis entspr. Bsp. 2 | 172 | 8,2 | 93 |
| Molverhältnis entspr. Bsp. 3 | 167 | 9,5 | 99 |
| **Erfindungsge- mäße Leime** | | | |
| Beispiel 1 | 110 | 6,0 | 11 |
| Beispiel 2 | 107 | 8,3 | 13 |
| Beispiel 3 | 100 | 9,4 | 10 |

Bestimmung des Methylolgruppengehalts der Harnstoff-Formaldehyd-Lösung: In den zu untersuchenden Proben liegt der Formaldehyd in Form von Methylolgruppen, freiem Formaldehyd und in untergeordnetem Maße in Form von Methylen- bzw. Methylenethergruppen vor. Mit der Kaliumcyanid-Methode wird die Summe Methylolgruppen plus freier Formaldehyd erfaßt. Mit der Sulfitmethode wird nur der freie Formaldehyd erfaßt. Der Methylolgruppengehalt ergibt sich aus der Differenz zwischen Prozent Formaldehyd (bestimmt nach der Kaliumcyanid-Methode) und Prozent Formaldehyd (bestimmt nach der Sulfitmethode).

Kaliumcyanid-Methode

Ca. 200 mg der zu untersuchenden Probe werden in einem 100 ml Dreihalskolben genau eingewogen. Anschließend werden 50 ml 0,1 n KCN-Lösung und 3 ml 5 n NaOH zugegeben und der Kolben mit Thermometer und Überleitungsrohr versehen. Der Überleitungsrohr taucht in eine Vorlage, in der sich ca. 20 ml destilliertes Wasser befinden. Der Kolben wird 20 Min. auf 353 K erhitzt (Thermostat). Danach wird das Überleitungsrohr vom Kolben getrennt, der Kolben verschlossen und auf Raumtemperatur gekühlt. Das Uberleitungsrohr wird zur Vorlage hin mit wenig destilliertem Wasser gespült, der Kolbeninhalt quantitativ in die Vorlage übergeführt. Nach Zugabe von einigen Tropfen Diphenylcarbozid als Indikator wird zunächst mit 2 n Salpetersäure entfärbt und danach die überschüssige 0,1 n KCN-Lösung mit 0,1 n Hg(NO₃)₂-Lösung bis zur schwach blauvioletten Färbung zurücktitriert.

$$\text{Prozent Formaldehyd (KCN)} = \frac{\text{Verb. 0,1 n KCN(ml) . 3.100}}{\text{Einwaage (mg)}}$$

Sulfit-Methode

Ca. 0,7 g der Probe werden in einen Erlenmeyerkolben genau eingewogen und 50 ml destilliertes Wasser (Meßzylinder) dazugegeben. Zu dieser Lösung fügt man 50 ml Na$_2$SO$_3$-Lösung (1-molar = 126 g/l) und einige Tropfen Rosolsäure als Indikator. Man titriert nun mit 1 n HCl von rosa nach farblos. Die Titration soll nach 30 Sekunden beendet sein. Daneben wird ein Blindwert bestimmt.

$$\text{Prozent Formaldehyd (Na}_2\text{SO}_3\text{)} = \frac{\text{Verbr. 1 n HCl(ml)} \cdot 30 \cdot 100}{\text{Einwaage (mg)}}$$

Prozent Methylolgruppen = Prozent Formaldehyd(KCN) - Prozent Formaldehyd (Na$_2$SO$_3$).

## Patentansprüche

1. Verfahren zur Herstellung eines reaktiven Harnstoff-Formaldehyd-Harz-Leimes der Formaldehydemissionsklasse E 1, der für die Herstellunig von Spanplatten geeignet ist, durch kontinuierliche Kondensation von Harnstoff und etwa 37%iger wäßriger Formaldehydlösung im Molverhältnis Harnstoff zu Formaldehyd von 1 zu 1,8 bis 1 zu 2,1 bei 383 bis 393 K und einem pH-Wert von 6,0 bis 6,5, Einstellung eines Endmolverhältnisses von Harnstoff zu Formaldehyd unter alkalischen Bedingungen von 1 zu 1,0 bis 1 zu 1,1 und Aufkonzentrierung des Leimes auf 66 Gew.-% Feststoff, dadurch gekennzeichnet, daß man die Harnstoff-Formaldehyd-Lösung im Molverhältnis 1 zu 1,8 bis 1 zu 2,1, bevor sie der sauren Kondensation bei 383 bis 393 K unterzogen wird, zunächst bei einem pH-Wert von 7,2 bis 8,0, der durch Laugezugabe eingestellt wird, und einer Temperatur von 288 bis 313 K so lange reagieren läßt, bis 10 bis 15 des gesamten Formaldehyds als Methylolgruppen vorliegen, und danach sofort durch Zugabe eines sauren Katalysators einen pH-Wert von 5,0 bis 5,5 einstellt und unter diesen Bedingungen das Reaktionsgemisch 15 bis 25 Min. bei 300 bis 323 K reagieren läßt.

2. Verfahren nach Anspruch 1, dadurch gekennzeichnet, daß als Katalysator Ameisensäure verwendet wird.

3. Verfahren nach Anspruch 1, dadurch gekennzeichnet, daß als Katalysator Ammoniumsalze starker Mineralsäuren verwendet werden.

## Claims

1. Process of manufacture of reactive urea-formaldehyde glue, falling under the formaldehyde emission category E1 and beeing suited for the production of chip boards, by continuous condensation of urea with a 37 % aqueous solution of formaldehyde in a molar ratio urea to formaldehyde of 1:1.8 to 1:2.1 at temperatures ranging from 383 to 393 K and at pH values ranging from 6.0 to 6.5, adjusting a final molar ratio urea to formaldehyde of 1:1.0 to 1:1.1 in an alkaline environment, and up-concentrating of the glue to 66 % by weight of solid content, characterized in that in the first instance, and before subjecting to acid condensation at 383 to 393 K, the urea-formaldehyde solution, having a molar ratio of 1:1.8 to 1:2.1 and a pH value of 7.2 to 8.0, adjusted by adding of alkali, is allowed to react at temperatures ranging from 288 to 313 K until 10 to 15 % of all the formaldehyde exist in form of methylol groups, and then a pH value of 5.0 to 5.5 is immediately adjusted by adding an acid catalyst, and the reactive mixture is allowed to react at 300 to 323 K for 15 to 25 minutes.

2. Process according to claim 1, characterized in that formic acid is used as catalyst.

3. Process according to claim 1, characterized in that ammonium salts of strong mineral acids are used as catalysts.

## Revendications

1. Procédé de fabrication d'une colle réactive à la résine formaldéhyde de la catégorie E 1 d'émission de formaldéhyde, appropriée à la production de panneaux de particules, par condensation continue d'urée et d'une solution de formaldéhyde aqueux d'environ 37 % dans le rapport molaire d'urée et de formaldéhyde de 1 à 1,8 jusqu'à 1 à 2,1 par 383 à 393 K et une valeur pH de 6,0 à 6,5, réglage d'un rapport molaire final d'urée et de formaldéhyde dans des conditions alcalines de 1 à 1,0 jusqu'à 1 à 1,1 et concentration de la colle jusqu'à 66 % en poids de solide, caractérisée par le fait que l'on laisse réagir la solution d'urée et de formaldéhyde au rapport molaire de 1 à 1,8 jusqu'à 1 à 2,1, avant de la soumettre à la condensation acide par 383 à 393 K, tout d'abord sous une valeur pH de 7,2 à 8,0 que l'on obtiendra en ajoutant de la lessive alcaline par une température de 288 à 313 K, jusquà ce que 10 à 15 % du formaldéhyde total se présentent comme groupes méthylol, immédiatement après on ajoutera un catalyseur acide pour régler une valeur pH de 5,0 à 5,5 et on laissera réagir dans ces conditions le mélange réactionnel durant 15 à 25 minutes par 300 à 323 K.

2. Procédé d'après prétention 1, caractérisé par l'emploi d'acide formique comme catalyseur.

3. Procédé d'après prétention 1, caractérisé par l'emploi de sels d'ammonium de forts acides minéraux comme catalyseurs.